# EUROPEAN PATENT APPLICATION

(11) **EP 1 675 277 A2**
(43) Date of publication of application: **28.06.2006**
(21) Application number: 05257945.5
(22) Date of filing: 21.12.2005
(51) Int. Cl.: H04B 7/04

(54) **Method and apparatus for controlling MIMO system using single serial programming interface**

(30) Priority: 24.12.2004 KR 2004112240
(71) Applicant: Samsung Electronics Co., Ltd., Suwon-si, Gyeonggi-Do (KR)
(72) Inventor: Kim, Hee-seung, 302 Sweetvill Apt., Suwon-si, Gyeonggi-do (KR); Kim, Dae-yeon, Suwon-si, Gyeonggi-do (KR); Jung, Weon-kyo, 3-201 Miryung Apt., Anyang-si, Gyeonggi-do (KR); Kim, Chong-ouk, Goyang-si, Gyeonggi-do (KR)
(74) Representative: Brandon, Paul Laurence

(57) **Abstract**

A method and apparatus for controlling a multi-input multi-output (MIMO) radio frequency (RF) transceiver having a plurality of RF blocks using a single serial programming interface (SPI) are provided. The MIMO system includes: a MIMO transceiver (1.00), having one or more input and output units and a serial interface conversion unit controlling the input and output units; and a controller, which controls the MIMO transceiver. The serial interface conversion unit receives control data from the controller via a serial programming interface (SPI) (102), decodes the received control data to have a format appropriate for controlling the input and output units, and encodes data received from the input and output units to be compatible with the SPI. Accordingly, it is possible to realize a small-sixed MIMO system having a simple structure and to reduce the probability of crrora occurring in the process of controlling a plurality of RF blocks (106)of the MIMO system.

## Description

### BACKGROUND OF THE INVENTION

The present invention relates to multi-input multi-output (MIMO) systems, methods of controlling MIMO systems and to data storage media.

The commercialization of wireless communications has enabled wireless transmissions of multimedia data as well as audio data. Since multimedia data is much larger than audio data, the transmission of multimedia data in real time requires a transceiver to have a sufficiently high effective data throughput. In order to improve effective data tbxoughputs, multi-input multi-output (MIMO) radio frequency (RF) systems have been devcloped.
A conventional MIMO RF system includes a plurality of RF blocks respectively corresponding to pairs of input and output ports. Each of the RF blocks includes a serial programming interlace (SPI) and thus is controllable by an external central processing unit (CPU) or a controller using the SPI.

In order to control the RF blocks, however, even the same command should be separately transmitted to all of the RF blocks via the respective SPIs. Thus, the conventional MIMO RF system unnecessarily occupies a large area and has a considerable number of signal lines.

Preferred embodiments of the present invention aim to provide a method and apparatus for controlling a multi-input multi-output (MIMO) system using a single scri.al programming interface (SPI), into which a plurality of SPIs for controlling a plurality of radio frequency (RF) blocks of the MIMO system arc integrated. The method and apparatus can control all of the RF blocks at the same time or can separately control the RF blocks from one another using the single SPI.

According to an aspect of the present invention, there is provided a multi-input multi-output (MIMO) system comprising: a MIMO transceiver, which comprises one or more input and output units and a serial interface conversion unit controlling the input and output units; and a controller, which controls the MIMO transceiver, wherein the serial interface conversion unit receives control data from the controller via a serial programming interface (SPI), decodes the received control data to comprise a format appropriate for controlling the input and output units, and encodes data received from the input and output units to be compatible with the SPI.

The format into which the serial interface conversion unit decodes the control data received from the controller, may include: a data field, which contains data necessary for controlling the input and output units; an address field, which contains a plurality of addresses allotted to a plurality of registers for controlling the input and output units; a device identification (ID) field, which identifies the input and output units; and a read or write (R/W) flag, which specifies whether the MIMO transceiver is in a read mode or in a write modc.

The device ID field may be comprised of as many bits as there are input and output units in the MIMO transceiver, the bits may respectively correspond to the input and output units of the MIMO transceiver, and thus, if the bits of the device ID field are activated, data may be transmitted to the respective input and output units.

According to another aspect of the present invention, there is provided a method of controlling a MIMO system having one or more input and output units, the method comprising: receiving control data via a serial programming interface (SPI); and decoding the received control data to have a format appropriate for controlling the input and output units.

According to another aspect of the present invention, there is provided a data storage medium storing a format of control data used for controlling one or more input and output units of a MIMO system, the control data format comprising: a data field, which contains data necessary for controlling the input and output units; an address field, which contains a plurality of addresses allotted to a plurality of registers for controlling the input and output units; a device identification (ID) field, which identifies the input and output units; and a read or write (R/W) flag, which specifies whether the MIMO system is in a read mode or in a write mode.

The device ID field may be comprised of as many bits as there are input and output units in the MIMO system, the bits may respectively correspond to the input and output units of the MIMO system, and thus, if the bits of the device ID field are activated, data may be transmitted to the respective input and output units.

The input and output units may be radio frequency (RF) blocks, and the MIMO system may be an RF transceiver having a plurality of RF blocks.

Further features of the present invention are set out in the appended claims.

The present invention will become more apparent by describing in detail exemplary embodiments thereof with reference to the attached drawings in which:
FIG. 1 is a block diagram of a multi-input multi-output (MIMO) radio frequency (RF) transceiver having a single serial programming interface (SPI) unit, according to an exemplary embodiment of the present invention;
FIG. 2 is a diagram illustrating the format of serial data used for controlling a plurali.ty of RF blocks of the MIMO RF transceiver of FIG. 1;
FIG. 3 is a timing diagram illustrating serial interface signals used for controlling the MIMO RF transceiver of FIG. 1; and
FIG. 4 is a flowchart of a method of controlling a MIMO RF transceiver according to an exemplary embodiment of the present invention.
The present invention will now be described more fully with reference to the accompanying drawings in which exemplary embodiments of the invention are shown.

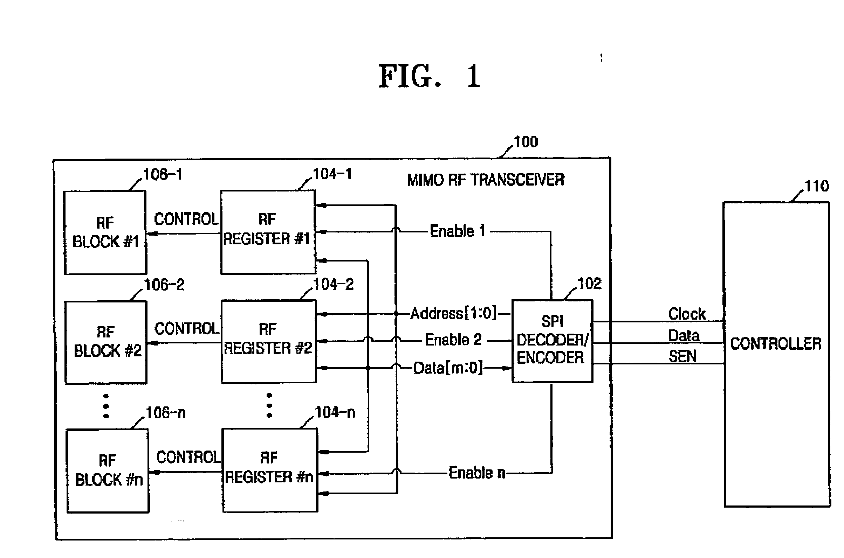

FIG. 1 is a block diagram of a multi-input multi-output radio frequency (RF) transceiver 100 having a single serial programming interface (SPI) unit, according to an exemplary embodiment of the present invention. Referring to FIG. 1, the MIMO RF transceiver 100 includes a plurality of transmitters and receivers having N×Nor(N-1)×N transmission and reception channels.

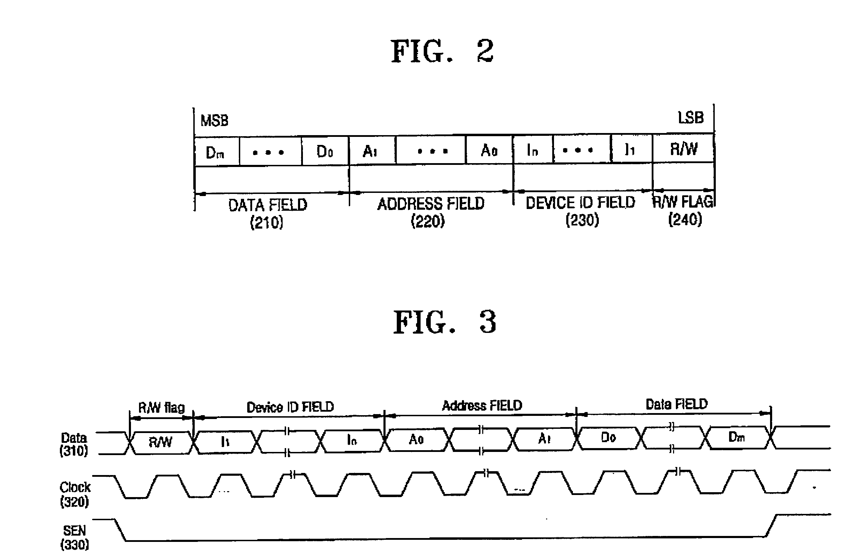

The MIMO RF transceiver 100 is controlled by a controller 110. The controller 110 transmits a command used for controlling the MIMO RF transceiver 100 to the MIMO RF transceiver 100 via a single SPI. The single SPI is an interface, such as I2C or RS232, which transmits data in series in synchronization with a clock signal. The format of the command used for controlling the MIMO RF transceiver 100 will be described in detail later with reference to FIG. 2. The controller 110 and the MIMO RF transceiver 100 are connected to each other by a clock signal (Clock), data (Data), and a serial enable signal (SEN). Specifically, a serial interface conversion unit 102 included in the MIMO RF transceiver 100 decodes the clock signal (Clock), the data (Data), and the serial enable signal (SEN) received from the controller 110 into Address[1:0], Data[m:0], and Enable, respectively, which arc used for controlling a plurality of RF blocks 106-1 through 106-n of the MIMO RF transceiver 100, and encodes signals received from the RF blocks 106-1 through 106-n and then transmits the encoded signals to the controller 110. The serial interface conversion unit 102 is also called an SPI decoder/encoder.

The SPI decoder/encoder 102 outputs enable signals enable-1 through enable-n, which are used for determining to which one of the RF blocks 106-1. through. 106-n the data (Data) received from the controller 110 is to be transmitted. In addition, the SPI decoder/encoder 102 outputs Addsess[1:0] and Data[m:0] in order to transmit the received data to a plurality of RF registers 104-1 through 104-n. The RF registers 104-1 through 104-n store register values used for controlling the respective RF blocks 106-1 through 106-n.

The RF registers 104-1 through 104-n receive the data (Data) from the SPI decoder/encodcr 102 and store the received data (Data) therein and transmit a control command to the respective RF blocks 106-1 through 106-n if the enable signals enable-1 through enable-n allotted thereto are activated. The RF blocks 106-1 through 106-n may be typical RF blocks comprised of analog circuits. A preferred embodiments of the present invention has been described above as being applicable to a MIMO RF transceiver having a plurality of RF blocks, However, embodiments of the present invention are also applicable to a MIMO multimedia data processor having a plurality of audio or video processors by installing the serial interface conversion unit 102 in the MIMO multimedia processor.

FIG. 2 is a diagram illustrating the format of serial data used for controlling the RF blocks 106-1 through 106-n of the MIMO RF transceiver 100 of FIG. 1, and particularly, the format of the data (Data) of FIG. 1. Referring to FIG. 2, the data (Data.) is serial data and includes a data field 210, an address field 220, a device identification (ID) field 230, and a read or write (R/W) flag 240. The data field 210 contains data used for controlling the RF blocks 106-1 through 106-n of the MIMO RF transceiver 100. The address field 220 contains a plurality of addresses allocated to the RF registers 104-1 through 104-n for controlling the RF blocks 106-1 through 106-n.

The device ID field 230 contains data designating one of the RF blocks 106-1 through 106-n to which the data (Data) is to be transmitted. For example, if the MIMO RF transceiver 100 has a 3 x 3 structure and the device ID field 230 i.s set to a value of '101', the first and third RF blocks 106-1 and 106-3 arc activated, and the data (Data) is transmitted to the activated first and third RF blocks 106-1 and 106-3. The R/W flag 240 specifies whether the MIMO RF transceiver 100 is in a read mode or in a write mode. For example, if the R/W flag 240 specifies that the MIMO RF transceiver 100 is in a read mode, the data (Data) is transmitted from thc controller 110 to the MIMO RF transceiver 100. If the R/W flag 240 specifies that the MIMO RF transceiver 100 is in a write mode, the data (Data) is transmitted from the MIMO RF transceiver 100 to the controller 110.

FIG. 3 is a tuning diagram illustrating serial interface signals used for controlling the MIMO RF transceiver 100 of FIG. 1, i.e., data (Data) (310), a clock signal (Clock) (320), and a serial enable signal (SEN) (330). Referring to FIG. 3, the data (Data) (310) is output in synchronization with the clock signal (Clock) (320). If the serial enable signal (SEN) (330) is enabled, the data (Data) (310) becomes valid. In other words, if the serial enable signal (SEN) (330) is enabled., the SPI decoder/encoder 102 reads the data (Data) (310) in synchronization with the clock signal (Clock) (320) and then decodes the read data (Data) (310) to have the format of FIG. 2.

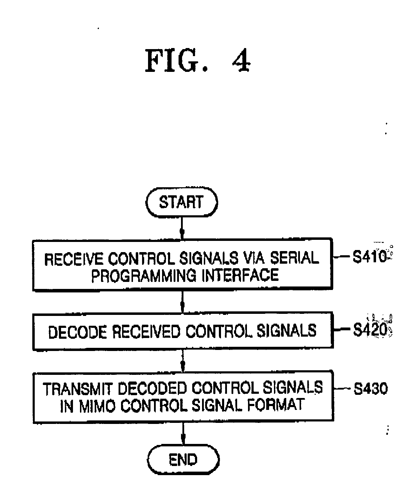

FIG. 4 is a flowchart of a method of controlling a MIMO RF transceiver according to an exemplary embodiment of the present invention. Referring to FIGS. 1 and 4, in operation S410, control signals, i.e., the data (Data) (310), the clock signal (Clock) (320), and the serial enable signal (SEN) (330) of FIG. 3, arc received from the controller 110 via an SPI. In operation S420, the received control signals arc decoded into a plurality of signals for controlling the RF blocks 106-1 through 106-n, i.e., control data having the format of FIG, 2, and a plurality of addresses allotted to the RF registers 104-1 through 104-n and data are transmitted in response to an enable signal (operation S430). In a case where there is data to be transmitted from the RF blocks 106-1 through 106-n to the controller 110, the SPI decoder/encoder 102 receives the data from the RF blocks 106-1 through 106-n and encodes the received data as data (Data), a clock signal (Clock), and a serial enable signal (SEN) and then transmits the data (Data), the clock signal (Clock), and the serial enable signal (SEN) to the controller 110. Various types of MEMO systems other than a MIMO RF transceiver having a plurality of RF blocks can also be controlled using the method of controlling a MIMO RF transceiver according to an exemplary embodiment of the present invention.

The method of controlling a MIMO RF transceiver according to an cxcmplary embodiment of the present invention can be written as a computer program. Codes and code segments of the computer program arc deductible by one of ordinary skill in the art. In addition, the computer program is stored in a computer-readable storage medium and is readable and executable by a computer in such a manner that realizes the method of controlling a MIMO RF transceiver according to an exemplary embodiment of the present invention.

Examples of the computer-readable storage medium include a magnetic recording medium, an optical recording medium, and a carrier wave medium.

As described above, according to preferred embodiments of the present invention, it is possible to control all of a plurality of RF blocks of a MIMO RF transceiver at the same time or control the RF blocks separately from one another by using a single SPI decoder/encoder. In addition, it is possible to realize various types of MIMO RF transceivers, e.g., 2 x 3, 3 x 3, or 3 x 4 MIMO transceivers. Moreover, it is possible to realize small-sized MIMO transecivers having a simple structure and to reduce the probability of errors occurring in the process of controlling the RF blocks by using the single SPI decoder/encoder.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which arc filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A multi-input multi-output (MIMO) system comprising:
a MIMO transceiver (100), which comprises one or more input and output units and a serial interface conversion unit controlling the input and output units; and
a controller (110), which controls the MIMO transceiver,
wherein the serial interface conversion unit receives control data from the controller via a serial programming interface (SPI) (102), decodes the received control data to comprise a format appropriate for controlling the input and output units, and encodes data received from the input and output units to be compatible with the SPI.

2. The MIMO system of claim 1, wherein the input and output units arc radio frequency (RF) blocks (106), and the MIMO transceiver is an RF transceiver comprising a plurality of RE blocks (104).

3. The MIMO system of claim 1, wherein the input and output units are audio processors or video processors, and the MIMO transceiver is a multimedia data processor comprising a plurality of audio processors or a plurality of video processors.

4. The MIMO system of any preceding claim, wherein the format into whieb the serial interface conversion unit decodes the control data received from the controller (110), comprises:
a data field (210), which comprises data necessary for controlling the input and output units;
an address field (220), which comprises a plurality of addresses allotted to a plurality of registers for controlling the input and output units;
a device identification (ID) field (230), which identifies the input and output units; and
a read or write (R/W) flag (240), which specifies whether the MIMO transceiver (100) is in a read mode or in a write mode.

5. The MIMO system of claim 4, wherein the device ID field (230) is comprised of as many bits as there are input and output units in the MIMO transceiver (100), the bits respectively correspond to the input and output units of the MIMO transceiver, and if the bits of the device ID field are activated, data is transmitted to the respective input and output units.

6. The MIMO system of any preceding claim, wherein the control data received by the SPI (102) comprises a clock signal, a data signal, which is transmitted from the controller to the MIMO transceiver (100) in synchronization with the clock signal, and an enable signal, which is used for determining to which input and output units of the MIMO transceiver the data signal is to be transmitted.

7. A method of controlling a MIMO system having one or more input and output units, the method comprising:
receiving control data via a serial programming interface (SPI) (102); and
decoding the received control data to comprise a format appropriate for controlling the input and output units.

8. The method of claim 7, further comprising encoding data received from one of the input and output units to be compatible with the SPI (102).

9. The method of claim 7 or claim 8, wherein the control data received by the SPI comprises a clock signal, a data signal, which is transmitted in synchronization with the clock signal, and an enable signal, which is used for determining to which input and output units of the MIMO transceiver (100) the data signal is to be transmitted.

10. The method of any one of claims 7-9, wherein the format into which the received control data is decoded, comprises:
a data field (21.0), which compriscs data necessary for controlling the input and output units;
an address field (220), which comprises a plurality of addresses allotted to a plurality of registers for controlling the input and output units;
a device identification (ID) field (230), which identifies the input and output units; and
a read or write (R/W) flag (240), which spccifics whether the MIMO transceiver (100) is in a read mode or in a write mode.

11. The method of claim 10, wherein the device ID field (230) is comprised of as many bits as there are input and output units in the MIMO transceiver (100), the bits respectively correspond to the input and output units of the MIMO transceiver, and if the bits of the device ID field are activated, data is transmitted to the respective input and output units.

12. A data storage medium storing a format of control data used for controlling one or more input and output units of a MIMO system, the control data format comprising:
a data field (210), which comprises data necessary for controlling the input and output units;
an address field (220), which comprises a plurality of addresses allotted to a plurality of registers for controlling the input and output units;
a device identification (ID) field (230), which identifies the input and output units; and
a read or write (R/W) flag (240), which specifies whether the MIMO system is in a read mode or in a write mode.

13. The data storage medium of claim 12, wherein the device ID field (230) is comprised of as many bits as there arc input and output units in the MIMO system, the bits respectively correspond to the input and output units of the MIMO system, and if the bits of the device ID field are activated, data is transmitted to the respective input and output units.

14. The data storage medium of claim 12, wherein the input and output units are radio frequency (RF) blocks, and the MIMO system is an RF transceiver comprising a plurality ofRF blocks (106).

15. A computer-readable data storage medium storing a computer program for executing the method of any one of claims 7-11.
